# EUROPEAN PATENT APPLICATION

(11) **EP 4 087 191 A1**
(43) Date of publication of application: **09.11.2022**
(21) Application number: 21172121.2
(22) Date of filing: 04.05.2021
(51) Int. Cl.: H04L 12/24, H04L 12/18, H04W 4/06, H04W 24/02

(54) **NETWORK MANAGER AND METHOD FOR MANAGING A BROADCAST NETWORK**

(71) Applicant: Rohde & Schwarz GmbH & Co. KG, 81671 München (DE)
(72) Inventor: JANNER, Thomas, 82194 Gröbenzell (DE); OESTREICHER, Lars, 80538 München (DE); REITMEIER, Manfred, 84036 Landshut (DE); SINNHUBER, Johannes, 86916 Kaufering (DE); TAGA, Aziz, 81241 München (DE); UHLMANN, Maurice, 84427 St. Wolfgang (DE)
(74) Representative: Kehl, Ascherl, Liebhoff & Ettmayr Patentanwälte Partnerschaft mbB

(57) **Abstract**

The present disclosure provides a network manager comprising a data interface configured to communicatively couple to at least one radio access network of a broadcast network that is configured to wirelessly emit a load data signal, and to communicatively couple to a load data source network; and a network controller coupled to the data interface and configured to receive request data with regard to the transmission of the load data from the load data source network, and to provide configuration data to configure the at least one radio access network to use specific radio access network resources for transmission of the load data; wherein the network controller is configured to define the specific radio access network resources based on the received request data. Further, the present disclosure provides a respective method for operating a broadcast network.

## Description

### TECHNICAL FIELD

The disclosure relates to a network manager and a respective method.

### BACKGROUND

Although applicable to any combination of different networks, the present disclosure will mainly be described in conjunction with broadcast networks and cellular networks.

Today, the number of communication devices that are served in cellular networks increases steadily. One source of new communication devices is the increasing demand of users for mobile voice and data communication. Other sources of this increase are new applications, like Internet-of-Things or loT devices.

With an increasing number of communication devices, cellular networks become more and more complex. Consequently, the technical and financial efforts required for building and managing such networks continually increase.

There is a need for reducing these efforts.

### SUMMARY

The above stated problem is solved by the features of the independent claims. It is understood, that independent claims of a claim category may be formed in analogy to the dependent claims of another claim category.

It is provided:
A network manager comprising a data interface configured to communicatively couple to at least one radio access network of a broadcast network that is configured to wirelessly emit a load data signal, and to communicatively couple to a load data source network; and a network controller communicatively coupled to the data interface and configured to receive request data with regard to the transmission of the load data from the load data source network, and to provide configuration data for the purpose of configuring or for configuring the at least one radio access network to use specific radio access network resources for transmission of the load data; wherein the network controller is configured to define the specific radio access network resources based on the received request data; and wherein the specific radio access network resources comprise at least one of a geographical location for transmission of the load data, a frequency range for transmission of the load data, and a transmission time for transmission of the load data; and wherein the request data comprises at least one of a priority of the load data, a quality for transmission of the load data, a bit rate for transmission of the load data, a transmission time for transmission of the load data, a geographical location for transmission of the load data, a frequency range for transmission of the load data, encryption information for the load data, types of intended receiving devices for the load data signals, and wireless radio access network resources for transmission of the load data.

Further, it is provided
A method for managing a broadcast network, the method comprising receiving request data with regard to a transmission of load data from a load data source network; and defining configuration data based on the received request data for the purpose of configuring at least one radio access network of a broadcast network to use specific radio access network resources for transmission of the load data; wherein the specific radio access network resources comprise at least one of a geographical location for transmission of the load data, a frequency range for transmission of the load data, and a transmission time for transmission of the load data; and wherein the request data comprises at least one of a priority of the load data, a quality for transmission of the load data, a bit rate for transmission of the load data, a transmission time for transmission of the load data, a geographical location for transmission of the load data, a frequency range for transmission of the load data, encryption information for the load data, types of intended receiving devices for the load data signals, and wireless radio access network resources for transmission of the load data.

The present disclosure acknowledges the fact that serving more devices in cellular networks increases the complexity of the networks, since smaller cells need to be provided, or more capable transmitters need to be provided, to serve the increased number of devices. With increasing capabilities, the complexity and therefore also the costs for the transmitters raise. The same may apply to the power consumption of such transmitters. Operating the cellular network therefore becomes more demanding technically and economically.

When planning a cellular network, the operator of the network may estimate the average load on the cellular network and dimension the cellular network accordingly. However, when a cellular network is dimensioned for an average load, the cellular network may experience congestion and overload situations.

Such situations may for example arise when an important event, like a live sports event is viewed by many users on their mobile devices. The data stream comprising e.g., video and audio data for such a sports event, needs to be provided to all transceivers of the cellular network that currently serve at least one user that wants to view the event. In addition, users today expect a flawless experience, where the video and audio data is distributed with low latencies and high quality, an expectation that is difficult to meet, especially under high-load conditions.

This is especially true, since mobile cellular networks have been based, and still rely on a strong unicast communication model to provide various services to their end users. However, nowadays consumers find their comfort while watching a huge amount of premium content, of which a high percentage is live media services.

On the other hand, broadcast networks are well established for broadcast and multicast data transmission like TV and radio transmissions via digital video broadcast like DVB-T, for terrestrial transmission, or DVB-S, for satellite transmission. Since broadcast networks are usually designed to provide broadcast or multicast one-way data transmission, these networks may operate efficiently with any number of receiving devices. Further, since the area of coverage of a transmitter of a broadcast network is larger than the area of coverage of a transmitter of a cellular network, which is especially the case for satellite-based broadcast networks, the network infrastructure of broadcast networks is less complex to build and maintain than the infrastructure of cellular networks.

The present disclosure acknowledges that users will demand more and more services from cellular networks on their mobile devices that either require overprovisioning or may lead to congestion in the cellular networks. The present disclosure, therefore, provides means for effectively using the infrastructure provided by broadcast networks to provide data to devices that usually operate in cellular networks.

A cellular network in the context of the present disclosure may be a communication network providing bi-directional wireless communication for electronic devices, like user equipment such as mobile phones, also called UE, loT devices and the like. Usually, a cellular network is a distributed network comprising "cells", wherein each cell is served by at least one fixed-location transceiver. A site hosting the fixed-location transceivers may also be called a base station. A cellular network usually allows transmission of voice, video and audio data and other types of content. Neighboring cells usually use different sets of frequencies to avoid interference between the single cells. Mobile devices in the cellular network may perform a hand-over when moving from one cell to another. All cells together form the cellular network and provide radio coverage over a wide geographical area, wherein small local cells, e.g. indoor cells, are also possible. A cellular network in the context of the present disclosure may also comprise a satellite-based cellular network. Such a satellite-based cellular network may offer bidirectional communication to receiving devices in small cells with low flying satellites. Usually, such a satellite-based cellular network will comprise a large number of satellites. These types of satellite-based cellular network may be designed for unicast data communication.

The single transceivers of a cellular network are usually communicatively coupled to a common network, also called core network or backbone network. Data may be served to the transceivers from the common network and may be provided from the transceivers into the common network. It is understood, that the common network not necessarily is a single network, but may also comprise different network segments that may be communicatively coupled to each other via other networks, like e.g. the internet or dedicated backbone networks.

In cellular networks traditionally, a point-to-point communication is performed, like e.g. when a telephone call is conducted between to devices. In modern cellular networks like e.g., 5G networks, multicast transmissions are also possible. Due to the limited size of the single cells in a cellular network, the data to be transmitted in a multicast mode hast to be transmitted to every single transceiver via the common network.

In the context of the present disclosure, the operator of a cellular network may also be called the MNO or mobile network operator.

A broadcast network in the context of the present disclosure may be a one-way communication network that usually provides at least one of audio communication and/or video communication in a one-way or unidirectional fashion to electronic devices, like radio receivers or TV sets. It is understood, that a broadcast in the context of the present disclosure may be terrestrial broadcast network, a satellite broadcast network or a combination of both.

It is understood, that in the context of the present disclosure, a broadcast network may also provide communication to devices that are usually served by cellular networks. Further, in the context of the present disclosure a broadcast network is not limited to broadcast transmissions, but may also provide multicast transmissions. A broadcast transmission in this context is to be understood as a transmission to all receivers within reach of a single transmitter. A multicast transmission in this context is to be understood as a transmission to a limited group of receivers within reach of a single transmitter, instead of all receivers.

A broadcast network may be formed by a group comprising at least one of a plurality of radio stations, a plurality television stations, or combined radio and television stations, or satellite stations. The term radio station refers to equipment for transmitting audio content wirelessly e.g., over the air. The term television station refers to equipment for transmitting audio and video content wirelessly e.g., over the air. The term satellite station refers generally to a satellite that is communicatively linked to a ground station and may be used as a radio access network or transmitter in the broadcast network.

It is understood, that for a broadcast network a common network, also called core network, may be provided that couples to the single transmitters, as explained above for cellular networks. If one or more satellites are part of the broadcast network, the respective ground stations may be communicatively coupled to the core network of the broadcast network. Since the area of coverage of a transmitter of a broadcast network is larger than the area of coverage of a transmitter of a cellular network, the common network needs to connect to a smaller number of transmitters and therefore usually is of lower complexity than the common network of a cellular network.

As explained above, the geographical area covered by each of the transmitters of a broadcast network is larger than the geographical area covered by each of the transmitters of a cellular network. In embodiments, the geographical area covered by each of the transmitters of a broadcast network may comprise an area larger than the geographical area covered by at least two transmitters of a cellular network, i.e. larger than two cells of the cellular network.

In examples, the area covered by a single terrestrial transmitter of a broadcast network may comprise a radius of about 1 km up to more than 100km. The area covered by a single transmitter of a cellular network may comprise a radius of up to 35 km. At the same time, the transmitting power of a transmitter in a broadcast network may range up to 20 kW. In cellular networks, the transmitting power of the respective transmitters may range up to 500 Watts. Further, the transmitters in broadcast networks will usually use other frequencies than the transmitters in cellular networks. The transmitters in the broadcast networks may for example use frequencies in the UHF band, for example between 470 MHz and 698 Mhz.

For satellites as transmitters, the size of the area of coverage may be size of the full earth globe, and the transmission power may be between 20W and 300W (depending on the bands and the usage).

Exemplary standards used in broadcast networks may comprise DVB-based protocols, especially DVB-T and DVB-S based protocols, ATSC-based protocols, and 5G for broadcast networks or any future broadcast network standard. In cellular networks, the respective standards like UMTS, LTE and 5G or any future cellular network protocol may be used.

In the context of the present disclosure, the operator of a broadcast network may also be called the BNO or broadcast network operator.

The cellular networks and the broadcast networks mentioned in the present disclosure may comprise so called radio access networks or RANs and core networks or CNs. A RAN or Radio Access Network provides a radio access technology, and usually resides between a user device and the respective CN. A RAN in the context of the present disclosure may comprise the base station with respective antennas and a connection to the CN, and/or a satellite with connection to the CN via a respective ground station.

The radio access networks, also called RANs, and core networks, also called CNs, mentioned in the present disclosure are not limited to a specific type of network. Nevertheless, in the present disclosure a RAN with regard to cellular networks may comprise at least one of a GRAN, also GSM radio access network, a GERAN, which is essentially the same as GRAN but specifying the inclusion of EDGE packet radio services, a UTRAN, also called UMTS radio access network, and an E-UTRAN, the Long Term Evolution (LTE) high speed and low latency radio access network, or a RAN according to any upcoming RAN standard, or satellite-based RAN.

Accordingly, in the present disclosure a RAN with regard to a broadcast network may comprise any technology that allows transmitting data in a broadcast or multicast manner to electronic devices. Such a RAN may for example comprise a DVB-T transmitter with respective antennas and a connection to the respective core network, or a satellite as DVB-S transmitter with respective antennas and a connection to the respective core network via the ground station of the satellite.

Possible RANs comprise, but are not limited to, multi-frequency network or MFN RANs, single frequency network or SFN RANs, and SC-PTM RANs, also called Single-Cell - Point-to-Multipoint RANs. The RANs in the context of the present disclosure may for example comprise so called LPLT transmitters, also called low-power low-tower transmitters, HPHT transmitters, also called high-power high-tower transmitters, MPMT transmitters, which are a hybrid transmitter combining elements of LPLT and HPHT transmitters. MPMT stands for Medium Power Medium Tower. MPMT transmitters may have an output power that comes in between LPLT and HPHT, e.g. 350W - 6KW, which automatically results in a coverage capability between those of LPLT and HPHT, e.g. 5KM - 30KM, depending on the specific deployment scenarios and other parameters. Further, a RAN in the context of the present disclosure may comprise at least one transmitter with a fixed geographical location. As explained above, a transmitter for a broadcast network may comprise a transmitting power of up to 20kW or more, and cover an area of more than 100km radius.

The term core network in the context of the present disclosure refers to a network that couples to the RANs of the respective network. Core networks are sometimes also referred to as backbone networks. It is understood, that any networking technology, like cable-based ethernet, optical fiber-based ethernet, or other network technologies may be used to transmit data in the core network to and from the RANs. The core network may further comprise connections to other networks, like the networks of content providers or the like.

It is understood, that radio access networks and core networks in the context of the present disclosure may comprise further elements, like network connections, network switches, network hubs, servers, and the like.

The present disclosure acknowledges, as indicated above, that data may be offloaded from load data source networks, like cellular networks, to a broadcast network. To support offloading of load data to broadcast networks, the present disclosure provides the network manager.

The network manager comprises a data interface that communicatively couples the network controller to at least one radio access network of the broadcast network and a load data source network. Such a load data source network may be the core network of the broadcast network. The core network usually transports load data to the radio access networks for emission in a load data signal to the receiving devices.

It is understood, that the load data source network and the radio access networks may be operated by the same operator. The network controller may therefore be coupled via a single network to the load data source network and the radio access networks. Communicatively coupled in this context refers to the data interface being capable of communicating with the respective entity, while a direct network connection or indirect network connection e.g., via other networks like the internet, is possible. Further, the data interface may comprise a single hardware interface or multiple hardware interfaces.

In other examples, the load data source network and the radio access networks may be operated by different operators and may not be provided in the same network. The data interface in such an example may communicatively couple to the different operators' networks as required directly or indirectly.

The network manager of the present disclosure may be provided in the broadcast network. In such an embodiment the data interface may be an internal interface in the broadcast network. The network manager may for example be provided as dedicated element, like a server in the broadcast network. Such a server may be communicatively coupled to the core network of the broadcast network via a hardware-based data interface, like an Ethernet interface. The network manager may also be provided as an additional function in a server that is already present in the core network. Such a network manager may for example be provided as software application in the server or a function of a firmware or operating software of the server. Such a network manager may comprise the data interface as a software-based interface, like an API, or as a combination of a software-based and hardware-based interface.

The core network is usually communicatively coupled to at least one radio access network. It is understood, that the broadcast network may comprise any number of radio access networks that may all be coupled, directly or indirectly, to the core network. The single radio access networks may be distributed over a specific geographical area like e.g., a country or simply the area of operation of a network operator that operates the broadcast network. The core network distributes load data to the radio access networks that is to be distributed or emitted via the radio access networks. It is understood, that the core network may comprise routing mechanisms that allow transmitting specific pieces of load data only to those radio access networks that should emit the load data in respective load data signals. It is understood, that the load data refers to the content or content data that is to be transmitted to receiving devices. Such load data may comprise video data, audio data, software update data, or any other type of data that is to be transmitted.

It is understood, that the core network may comprise a respective interface or respective interfaces that allow operators of cellular networks or other content providers to provide the load data to the core network. Such interfaces may comprise hardware-based network interfaces, API-based or software-based interfaces, or a combination of both. The core network may for example be coupled via a hardware interface to a network of a content provider or cellular network operator directly or indirectly. The load data may be provided to the core network via an upload functionality that is provided by the core network. It is understood, that such an upload functionality may comprise security measures, like e.g. authentication and encryption. In embodiments, the core network may for example comprise one or more FTP or HTTP(S) servers, that allow a content provider to upload the load data. In case of live streaming data, the core network may also provide a streaming endpoint, that accepts the load data in the form of a stream for further processing in the core network. In other embodiments, the broadcast network e.g., a network controller or other elements of the core network, like a data loader, may be configured to retrieve the load data from a location that may be indicated by the provider of the load data.

If, as indicated above, the network manager is provided as part of the broadcast network, the request data as provided to the core network is directly available for the network manager. This is especially true, if the network manager is provided in an element of the core network.

The network manager may however also be provided outside of the broadcast network. This allows providing the function of the network manager as an external service to operators of broadcast networks.

In such embodiments, the network manager may be provided as a dedicated service. The expression dedicated service includes providing the service from a dedicated server, a virtualized server, as a cloud-based service, or any other form of providing the respective functionality. The data interface of such a network manager may comprise a hardware-based interface, like an Ethernet interface, a software-based interface comprising respective API-functions, upload and download functions, and control functions, or a combination of both.

If the network manager is not provided in the broadcast network, the request data in the load data source network is not directly available to the network manager. The data interface may therefore be capable of passively receiving and/or actively retrieving the request data from the load data source network. The load data source network may for example comprise a cellular network, a content distribution network or other content provider networks.

The network controller receives the request data, that may be seen as a kind of metadata for the load data, and defines or requests, parameters for how the load data should be emitted via the radio access networks. The request data therefore indirectly defines which radio access network resources should be used for emission of the load data signal, without explicitly stating the radio access network resources. The request data may however also define or request specific radio access network resources for transmission of the load data directly.

The radio access network resources may comprise at least one of a geographical location for transmission of the load data, a frequency range for transmission of the load data, and a transmission time for transmission of the load data.

A request data may refer to the priority of the load data. The priority of the load data defines how important it is to emit the load data for the provider of the load data e.g., a cellular network provider or a content distribution network. Load data with a higher priority may be preferred when assigning other request data for the respective load data. The provider of the load data may define the priority in the request data, and the operator of the broadcast network may for example bill the provider of the load data based on, but not necessarily exclusively, the priority defined for the load data.

Another request data may refer to a quality for transmission of the load data. The quality may refer to a bit rate of the load data or a coding quality used for encoding the load data. A further request data may refer to a codec used for encoding the load data. These types of request data may be relevant especially with video and audio data, and may influence the perceived quality of the video or audio at the receiving devices.

The request data may also refer to a bit rate for transmission of the load data that indicates the minimum bit rate that the provider of the load data requires. This request data is for example important to allow the provider of the load data to request the minimum bit rate for audio or video streaming, that would allow the receiving devices to reproduce the audio or video stream with the required quality parameters.

Another request data may also refer to an encryption information for encrypting the load data. This type of request data may be used e.g. to control access to the load data or to ensure integrity of the load data. With such an encryption-related request data, the encryption may be performed in the network manager.

Other request data may refer to a transmission time for transmission of the load data, or a geographical location or region for transmission of the load data. The request data may for example request the load data to be transmitted at a specific time and a specific region. Such request data may for example be used to control the emission of load data that is temporarily required in specific regions. Possible load data for a temporary and local transmission may for example refer to live sports events that need to be broadcast in a specific region at the exact time of the live sports event. The request data may for example comprise that the load data should be transmitted in a specific area, for example southern Germany, on a specific day and a specific time, and will last about 2,5 hours. Instead of a general region, like southern Germany, the request data may also specify a transmitter location, like e.g. Wendelstein or Ismaning, which are located in southern Germany. Other exemplary request data may for example indicate that specific load data should be transmitted 24 hours every day and in a hole country or over a hole continent.

In addition, a request data may refer to types of intended receiving devices for the load data signals. The data transmission may for example be configured differently for reception by mobile UEs e.g., smartphones or the like, or by stationary loT device, also called internet of things devices.

Request data may also refer to wireless radio access network resources for transmission of the load data, like for example at least one of a frequency range for transmission of the load data, a modulation scheme used for transmission of the load data, Cyclic Prefix, CP, : Sub-Carrier Spacing, SCS, Allocation Retention Priority, ARP, Pre-emption Capability Indicator, PCI, Pre-emption Vulnerability Indicator, PVI, Channel Quality Indicator, CQI (within radio access network), and Quality of service Class Indicator, QCI (within core network).

It is understood, that not all of the above-mentioned types of request data need to be explicitly defined in the request data. Some of the request data may for example be derived from the load data or may be defined by the network controller. For example, a coding quality, or a bit rate, or a used codec or the like may be derived from audio or video load data.

In embodiments, the network controller may implement a user management for the providers of the load data and the request data. The user management may for example define login data for the providers of the load data and the request data. Further, the user management may define restrictions for the providers of the load data and the request data, that may restrict the options provided to the providers of the load data and the request data, especially regarding the content of the request data. Further, these restrictions may also refer to the format of the load data, the amount of load data and the like. It is understood, that restriction imposed on the amount of load data may in embodiments be dynamic restrictions that may e.g. be based on a daily, monthly or yearly individual quota for the providers of the load data and the request data. Other parameters that may be restricted may refer e.g., to a data rate, a content encoding, a content encryption, and the like. It is understood, that providers of the load data and the request data may be offered to upgrade restricted parameters of the load data, e.g. by paying a respective fee.

For transmission of the load data, the relevant radio access networks may be configured by the network controller based on the received request data. Configuring in this regard refers to providing respective configuration data to the radio access networks, which will allow the radio access networks to emit the load data signal as indicated in the request data with the respective radio access network resources. If the request data indicates that the load data should only be distributed in specific areas, the network controller may also identify the relevant radio access networks and provide the configuration data to the respective radio access networks only. The network controller may also inform the respective core network accordingly, that may also provide the load data to the respective radio access networks only.

It is understood, that the network controller may provide the configuration data to the radio access networks prior to the core network providing the load data to the respective radio access networks. To this end, the configuration data may identify the load data with a respective identifier that may be provided in the configuration data and the load data. This allows for example pre-configuring the radio access networks when the request data is received, which may be long before the load data is to be emitted, and therefore long before the load data is provided to the core network or the radio access networks. This may for example be the case, when a cellular network operator reserves radio access network resources for the transmission of a live event, like a sports event or a live concert, long before the event is happening via respective request data.

The radio access networks may comprise respective controllers that receive and store the configuration data and control the transmitter elements in the radio access networks to use the respective radio access network resources accordingly. In modern network architectures, single elements may be virtualized. Therefore, the controllers of the radio access networks may also be provided as virtualized controllers in a server that is provided in the core network. Respective request data may then be provided from the virtualized controllers to the other elements of the radio access networks. It is understood, with the possibility of virtualizing network elements, that an element that is disclosed in the present disclosure as being part of or being comprised by another element, may be functionally linked to the other element. At the same time such an element may be virtualized and provided at another location but linked via respective data connections to the other element.

It is understood, that the configuration data and the load data may be provided to the radio access networks as separate information, especially if the configuration data is provided before the load data. However, in cases where the configuration data is provided at the same time as the load data, the configuration data and the load data may be provided to the radio access networks as combined data. The network controller may for example receive the load data via the data interface and provide the configuration data as a header to the load data. Alternatively, the network controller could provide the configuration data to the load data source network, which could add the configuration data as header data to the load data. This also allows dynamically changing the configuration data for different segments of the load data that comprise a dedicated header.

A broadcast network in the context of the present disclosure is capable of dynamically receiving the load data from e.g., a cellular network, and of transmitting the load data to electronic devices, that usually receive the load data via the cellular network. The network manager will control how the load data is emitted by the radio access networks of the respective broadcast network. Instead of by a cellular network, the load data may also be provided directly by a content distribution network or other content providers.

Especially for cellular networks, the broadcast network provides a kind of backup network or offloading network for high load situations. Further, via the network controller an operator of such a network, like a cellular network, may dynamically offload load data into the broadcast network. It is understood, that the respective receiving devices may be informed via the respective network e.g., the cellular network, about the transmission of the load data via the broadcast network.

Further embodiments of the present disclosure are subject of the further dependent claims and of the following description, referring to the drawings.

In an embodiment, the network controller may be configured to receive further request data for the transmission of further load data. In a further embodiment, the network controller may be configured to define radio access network resources for transmission of the further load data based on the received further request data and verify if the radio access network resources defined for the further load data conflict with the radio access network resources defined for the original load data. Further, the network controller may be configured to output an alert if the radio access network resources defined for the further load data conflict with the radio access network resources defined for the original load data.

As indicated above, the request data may be provided by a content provider in advance long before the respective load data is to be transmitted via the broadcast network. This means that radio access network resources may be reserved by the requesting party via respective request data. If it is possible for two different content providers to request radio access network resources in advance, they may also request the same or overlapping radio access network resources.

It may therefore happen that the network controller receives request data, the original request data, for the transmission of load data i.e., the original load data. Later the network controller may receive further request data for the transmission of further load data.

If the original request data and the further request data do not lead to the definition or reservation of conflicting radio access network resources, both transmissions may be performed as requested via the radio access networks of the broadcast network. However, the original request data and the further request data may lead to the definition or reservation of conflicting radio access network resources. The network controller may therefore verify that no such conflict is caused by the original request data and the further request data.

To this end, the network controller may comprise a database for storing information about radio access network resources that are already reserved, and may only accept new request data that does not lead to a conflict with already reserved radio access network resources.

It is understood, that the network controller may provide at least the provider of the further request data with a respective alert or alarm signal if conflicting radio access network resources are detected.

In another embodiment, the network controller may be configured to provide new configuration data that is based on the further request data to the at least one radio access network, wherein the new configuration data re-configures the at least one radio access network to use at least part of the specific radio access network resources for transmission of the further load data.

In embodiments, it may be required to re-configure the radio access networks. The network controller may therefore, instead of or in addition to generating an alert or alarm signal, if the original request data and the further request data lead to conflicting radio access network resources, also re-configure the radio access networks according to the further control data.

It is understood, that the network controller may also comprise a user interface that allows an operator of the broadcast network to manually overwrite requested radio access network resources.

In a further embodiment, the network controller may be configured to provide the new configuration data to the at least one radio access network if the new request data indicates that the further load data has a higher priority than the original load data.

An exemplary situation, in which the radio access networks may be reconfigured despite the radio access networks being already configured based on respective request data, is a situation where high priority content is to be transmitted. Load data with higher priority may for example comprise load data that comprises relevant public information like e.g., safety-related information, health-related information, disaster-related information, or the like.

In other examples, the further load data may be provided from a source that is assigned a higher priority than the source of the original load data. The priority may be assigned by the operator of the broadcast network e.g., individually for all providers of load data, or e.g., dynamically for every request depending on a price being paid by the provider of the load data.

In yet another embodiment, the network controller may be configured to provide the new configuration data to the at least one radio access network if the new request data leads to the definition of a value for at least one of the radio access network resources that is inferior to the respective value caused by the original request data.

Another situation, in which the radio access networks may be reconfigured may arise if the originator of the original request data indicated that using a reduced radio access network resource for transmitting the load data would be acceptable.

A content provider may for example request the transmission of video data in 4K resolution at a specific time of the day. The content provider may further indicate that a reduction of the resolution would be acceptable. The network controller may now identify a shortage on radio access network resources that specific time of day, for example because it is requested to transmit more load data at the specific time of day.

In this situation, the network controller may now change the original configuration data and provide new configuration data to the radio access networks that configures the radio access networks to transmit the load data with reduced resolution.

It is understood, that in such an embodiment, the network controller may also instruct a respective core network to provide the load data with the respective reduced resolution to the radio access networks. The core network may either already have received the load data from the content provider accordingly, or may comprise means for transcoding the load data accordingly.

In other situations, the network controller may change other radio access network resources. The network controller may for example change the frequencies or frequency bands used for the transmission of the load data. A content provider may for example have requested frequencies or frequency bands, which in a specific area are known to be free of interference. The network controller may still transmit the load data for this request on other frequencies or frequency bands, if required.

It is understood, that the operator of the broadcast network may provide an incentive to the provider of the load data to allow using reduced radio access network resources.

The operator of the broadcast network may for example reduce the amount of quota used by the load data if inferior radio access network resources are used. The exact amount may for example be determined as a relation like 1:0.5, which would mean that only 0.5 times the actual load data will be accounted for in the quota of the content provider. In other embodiments, financial incentives may be offered to the content provider.

It is understood, that the term "reduced" or "inferior" in this regard refers to a radio access network resources being used that has the potential to reduce the data rate, the data integrity, the user experience, or any other aspect of the data transmission.

In another embodiment, the network controller may be configured to provide the new configuration data to the at least one radio access network if the new request data leads to the definition of a value for at least one of the radio access network resources that overwrites the respective value defined in the original request data.

Another situation, in which the radio access networks may be reconfigured may arise if the originator of the original request data indicated that a respective radio access network resource is not mandatory for transmission of his load data.

For example, an operator of a network of loT devices may request the transmission of a software update at 23:00 of a specific day. However, the operator of the network of loT devices may also indicate that the transmission is not critical or that the exact time of delivery is not very important. In embodiments, the operator of the network of loT devices may also define a latest time of delivery for the software update.

If a request is received for transmitting load data comprising e.g., live video data, the same day from 22:00 to 24:00, the network controller may cancel the transmission of the software update or postpone the transmission of the software update, since the operator of the network of loT devices indicated that the transmission would not be critical. If the operator of the network of loT devices also indicated a latest time of delivery, the network controller may re-schedule the transmission of the software update to a later point in time.

Again, the acceptance of cancelling or postponing specific emissions of load data may be increased by providing respective incentives, as already indicated above.

In an embodiment, the network manager may comprise a control interface that comprises an interface accessible via a data network, especially at least one of a web-based user-accessible interface, and an API-based machine-accessible interface, and a RESTful interface, and an XML-based or JSON-based interface, and a client-program-based interface.

The control interface may be provided as an interface that is easily accessible for human users. To this end, the control interface may for example be provided as a web-based user interface. Such a web-based user interface may be hosted on a server in the broadcast network and may deliver a respective interactive web page to a client program, like a web browser program.

Such an interactive web page may not only allow a user to provide the request data for respective load data. Such an interactive web page may also provide feedback to the user regarding his requests. Regional settings or parameters may for example be shown on a map. Frequency-related settings may for example be shown in a respective diagram, and the like.

In addition or as alternative to the human accessible control interface, a machine-accessible or API-based control interface may be provided. Such a control interface may allow interaction via a respective data format, like XML, JSON, or the like. It is understood, that a single endpoint may be defined for the API-based control interface or that different end-points may be defined, like in a RESTful interface.

It is understood, that a respective client program may also be provided that allows interaction via the control interface. Such a client program may use the machine-accessible version of the control interface and process the data for presentation to the user.

The control interface may provide a feedback about the availability of the radio access network resources that are requested via the request data as response to receiving request data. If the requested radio access network resources are available, the control interface may report accordingly.

In other examples, the control interface may indicate that the requested radio access network resources are not available. In addition, the control interface may provide an alternative set or ranges of radio access network resources that may be used instead. It is understood, that the information about alternative radio access network resources may be requested by the control interface from the network controller.

Alternative sets of radio access network resources may be identified by searching for sets of radio resources that only deviate from the request in one, two or three of the radio access network resources. The suggested set of radio access network resources may for example differ from the requested radio access network resources in the geographical region for emission of the load data, in the frequency range or bandwidth used for emitting the load data, in the time or time period used for emitting the load data. It is understood, that with the suggested set of radio access network resources another quota relation or price may also be provided. If for example, with the originally requested radio access network resources, the quota relation would have been 1:1, the suggested set of radio access network resources may comprise a data-wise more expensive quota relation, like 1:2 or a data-wise less expensive quota relation, like 1:0.5.

In a further embodiment, the network controller may be configured to provide configuration data to the at least one radio access network that configures the at least one radio access network to stop emitting the load data signal or to emit the load data with reduced radio access network resources, if a network traffic quota defined for the source of the load data is exceeded during the transmission of the load data.

As already mentioned above, the operator of the broadcast network may provide quotas to the content providers. On the one hand, the operator of the broadcast network may limit the overall data rate in the broadcast network by implementing quotas. On the other hand, the operator of the broadcast network may incentivize the content providers to use the broadcast network efficiently, for example by providing respective incentives when applying the quota to load data.

It is understood, that the network traffic quota may not only refer to a data volume measured e.g., in megabytes, gigabytes or terabytes. The network traffic quota may also refer to a monetary credit that the content provider may have with the operator of the broadcast network.

In yet another embodiment, the network controller may be configured to receive the request data prior to reception of the load data in the core network.

As already indicated above, the request data may be received in the broadcast network prior to receiving the load data for reservation of the respective radio access network resources by the respective content provider. A respective memory may be provided in the network controller and/or in the radio access networks.

In another embodiment, the network manager may comprise a data storage, and the network controller may be configured to receive load data and store the received load data in the data storage.

In addition to receiving the request data prior to receiving the load data, the network manager may also receive the load data in advance to the emission of the load data via the radio access networks.

The network manager may comprise a respective data storage to pre-store the load data for later transmission. This is especially relevant for load data that does not represent live footage and does not need to be emitted instantly.

The network manager may therefore serve as a temporary storage for offloading load data from the content provider e.g., a cellular network. This allows reducing the size and/or number of storages in the content providers network.

Further, if the load data is pre-stored in the network manager, it is also possible to emit the load data in a bulk emission to the receiving devices. This may for example be used to pre-store load data in the receiving devices. For example, an operator of a cellular network may notice an increased interest in specific content like e.g., a new season of a TV series or the currently most watched movies. Such content may pose a problem for a cellular network, because it constantly causes high network load if many users watch the same series concurrently.

With the data storage, the cellular network operator may provide a full season of a series or the most watched movies to the network manager and request the transmission of the load data in bulk to the receiving devices. The single receiving devices may then store the load data that is transmitted in bulk for viewing later by the users.

The bulk emission of the load data may be performed during times of the day that usually comprise only a low amount of load data emitted via the network manager, for example during the nights.

In addition, a bulk emission may be performed at the maximum possible speed, instead of at a streaming data rate. Therefore, the time required to perform a bulk transmission is reduced compared to streaming a video.

In other embodiments, the network manager may also offload data to cellular networks, i.e. the other way as described above. This may be used by the operator of the broadcast network e.g., to fulfill service level agreements, even if the broadcast network is not operating at full capacity for any reason.

In an embodiment, the network manager may comprise a data transformer configured to transform the load data into transformed load data that is compatible with the specific radio access network resources for transmission of the load data.

As explained above, the load data may be provided in a respective format to the network manager. In case of video data, the video data may be provided e.g., in a predetermined resolution and encoded with a predetermined codec. In some cases, the load data as provided may not be ideal for emission via the radio access networks or the radio access network resources may be changed, as indicated above.

The data transformer may in such cases be used to change the load data, for example to transcode load data comprising video content into a video with another resolution or encoded with another codec. The data transformer may also be used to add additional security measures, like encryption, to the load data.

The data transformer may be provided as a dedicated element that is communicatively coupled to the network manager. As an alternative, the data transformer may be provided as element of the load data source network, or as an element of the radio access networks. The above-mentioned virtualization may also be applied to the data transformer.

In a further embodiment, the network manager may comprise a load estimator configured to estimate a necessity for emitting the load data signal at a point in time. The network controller may be communicatively coupled to the load estimator and may be configured to receive the estimated necessity and to generate respective configuration data for the load data further based on the estimated necessity, if the estimated necessity is higher than a threshold. The load estimator may be configured to estimate the necessity based on at least one of the type of the load data or type of content of the load data to be transmitted at the point in time, a number of expected receiving devices for the type of load data or type of content of the load data, and a region of interest for the type of load data.

The load estimator serves for estimating the necessity to transmit load data at certain points in time. To this end, the load estimator may for example be provided with a list of important events, like sports events, live concerts or the like, that may be interesting for a larger audience. In other embodiments, the load estimator may also comprise an event discovery function, that searches for relevant events automatically e.g., via the internet. Such an event discovery function may for example comprise an artificial intelligence trained to identify event names and types or dates in search results.

Such an artificial intelligence may comprise a so called "named entity recognition" or "NER" function or element, that may be trained to identify events and dates. It is understood, that a full NLP or natural language processing pipeline may be provided that includes additional functions that may be executed before the NER function, like e.g., a tokenizer for segmenting a text into tokens, a tagger for assigning part-of-speech tags to tokens, and a parser for assigning dependency labels to the tokens.

Such an artificial intelligence may also be trained to generate respective search requests. For text generation the artificial intelligence system may for example use a pre-trained model that may be further trained on the individual problem of generating such search request, like the BERT model, or a GPT-family model.

If a type of event is known, the load estimator may use historical data of similar events to estimate the necessity of emitting the respective load data via the broadcast network. The historical data may for example be provided by the content provider of the load data or from open information sources that indicate the size of the audience for that type of event in the past. The load estimator may also use historical data of the broadcast network itself.

If for example, a first match of the European Champions League was offloaded by a cellular network operator to the broadcast network, the load estimator may estimate that the other matches, or at least other matches between teams of the same countries or regions, may also be offloaded to the broadcast network.

The load estimator may also perform a geographical estimation. For example, the load estimator may estimate the necessity for emitting load data regarding the European Champions League to be very low outside of Europe, but very high inside of Europe. The load estimator may also include details about the respective event in the geographical estimation. For example, the necessity may be estimated higher for a respective region, if the respective event may awaken interest in many people of that region.

A live concert of a famous German singer may for example awaken interest in the whole country. In contrast, a soccer match of FC Bayern München may awaken interest in the southern region of Germany.

In embodiments, the users of the receiving devices may also be questioned about their interest in the respective event, and the estimation may include the users' responses.

Summing up, the load estimator may estimate when and where the emission of load data may be requested by a content provider, and provide this information to the network controller. The necessity may for example be provided as a value between 0 and 1, wherein 1 may denote the highest necessity. In other embodiments, the load estimator may simply inform the network controller that an emission will be required and when and where that emission will be required, instead of providing a necessity value and further information.

The network controller may then generate respective configuration data based on the information provided by the load estimator and reserve respective radio access network resources.

It is understood, that such configuration data may be marked e.g., as "non-booked", as long as the content provider does not actively request the transmission of the respective load data. However, in case that the content provider requests the transmission of the load data, the broadcast network may provide the content provider with enough resources.

In contrast, it the content provider does not request the transmission of the load data in due time e.g., a predefined amount of time before the event happens, the reservation may be cancelled and the radio access network resources may be free for requesting by other content providers.

It is understood, that the data storage, the data transformer, and the load estimator may also be provided as a separate entities and not as part of the network manager. This also allows providing the functionality of the data storage, the data transformer, and the load estimator according to the present disclosure as external service to operators of existing broadcast networks.

In such an embodiment, the data storage, the data transformer, and the load estimator may comprise data connections to the network controller, the core network and/or the radio access networks for controlling the network controller, the core network and the radio access network resources accordingly.

The present disclosure therefore explicitly is meant to disclose the data storage, the data transformer, and the load estimator as separate elements that are not part of a network manager but that are communicatively coupled to a network manager.

Further, the present disclosure is also meant to expressly disclose a broadcast network comprising the network manager. Such a broadcast network may comprise at least one radio access network, a core network as load data source network, and a network manager.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a schematic diagram of an embodiment of a network manager according to the present disclosure, a load data source network and a broadcast network;
Figure 2 shows a schematic diagram of another embodiment of a network manager according to the present disclosure, a load data source network and a broadcast network;
Figure 3 shows a schematic diagram of another embodiment of a network manager according to the present disclosure, a load data source network and a broadcast network; and
Figure 4 shows a flow diagram of an embodiment of a method according to the present disclosure.

In the figures like reference signs denote like elements unless stated otherwise.

### DETAILED DESCRIPTION OF THE DRAWINGS

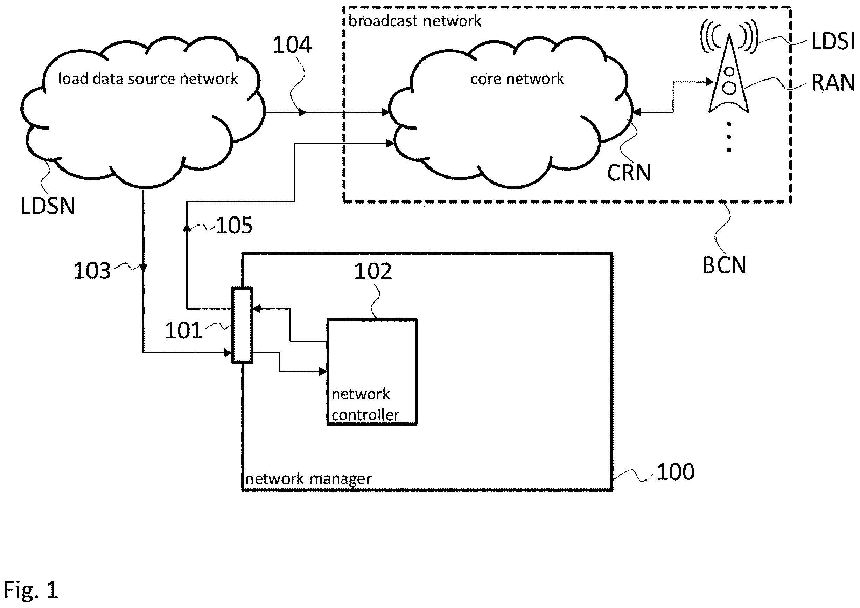

Figure 1 shows a schematic diagram of a network manager 100 together with a load data source network LDSN and a broadcast network BCN.

The load data source network LDSN may be the network of a load data provider, like for example a streaming media service. It is understood, that the load data source network LDSN may comprise data storages, network devices and any other element required to provide the respective services offered by the load data source network LDSN.

The broadcast network BCN comprises a core network CRN that is communicatively coupled to a plurality of radio access networks RAN that emit wireless load data signals LDSI. For sake of clarity, only one radio access network RAN is shown, and more radio access networks RAN are hinted at by three dots. It is understood, that the broadcast network BCN may comprise any number of radio access networks RAN distributed over the area of operation of the operator of the broadcast network BCN. The core network CRN provides load data 104 to the radio access networks RAN for transmission to receiving devices in the load data signals LDSI. The load data 104 may be provided from the load data source network LDSN to the core network CRN directly.

In embodiments, the load data source network LDSN may be implemented as the core network CRN. In such embodiments, the load data 104 may be provided from any other source to the core network CRN. Further, it is understood, that the above-presented explanations regarding load data source networks and broadcast networks may be applied to the load data source network LDSN and the broadcast network BCN.

In addition, in other embodiments, the network manager 100 may be provided as component of the load data source network LDSN or as component of the broadcast network BCN, especially of the core network CRN.

The network manager 100 comprises a data interface 101 that is internally communicatively coupled to a network controller 102. Externally, the data interface 101 is communicatively coupled to the load data source network LDSN and to the broadcast network BCN.

The network controller 102 receives request data 103 with regard to the transmission of the load data 104 from the load data source network LDSN. The request data 103 may for example comprise or indicate a priority of the load data 104, a quality for transmission of the load data 104, a bit rate for transmission of the load data 104, a transmission time for transmission of the load data 104, a geographical location for transmission of the load data 104, a frequency range for transmission of the load data 104, encryption information for the load data 104, types of intended receiving devices for the load data signals LDSI, and wireless radio access network resources for transmission of the load data 104.

The network controller 102 determines respective configuration data 105 for the purpose of configuring the at least one radio access network RAN to use specific radio access network resources for transmission of the load data 104 based on the received request data 103. The configuration data 105 is then provided via the data interface 101 to the core network CRN for configuration of the radio access networks RAN. It is understood, that the configuration data 105 may also be provided from the network manager 100 directly to the radio access networks RAN or to the load data source network LDSN.

The specific radio access network resources may for example comprise at least one of a geographical location for transmission of the load data 104, a frequency range for transmission of the load data 104, and a transmission time for transmission of the load data 104, and a modulation scheme for transmission of the load data 104.

Of course, the network controller 102 may also receive further request data 103 for multiple pieces of load data. The network controller 102 may then define radio access network resources for transmission of the further load data 104 based on the received further request data 103 and verify if the radio access network resources defined for the further load data 104 conflict with the radio access network resources defined for the original load data 104. If this is the case, the network controller 102 may for example output an alert to the load data source network LDSN and/or the broadcast network BCN.

Further, the network controller 102 may provide new configuration data 105 that is based on the further request data 103 to the radio access networks RAN that overwrites the original configuration data 105. Such new configuration data 105 may re-configure the at least one radio access network RAN to use at least part of the radio access network resources indicated by the original configuration data 105 for transmission of the further load data 104.

The network controller 102 may for example provide the new configuration data 105 if the new request data 103 indicates that the further load data 104 has a higher priority than the original load data 104, or if the new request data 103 leads to the definition of a value for at least one of the radio access network resources that is inferior to the respective value caused by the original request data 103, or if the new request data 103 leads to the definition of a value for at least one of the radio access network resources that overwrites the respective value defined in the original request data 103. The network controller 102 may also provide configuration data 105 to radio access networks RAN that stops the radio access networks RAN from emitting the load data signal LDSI or to emit the load data 104 with reduced radio access network resources, if a network traffic quota defined for the source of the load data 104 is exceeded during the transmission of the load data 104.

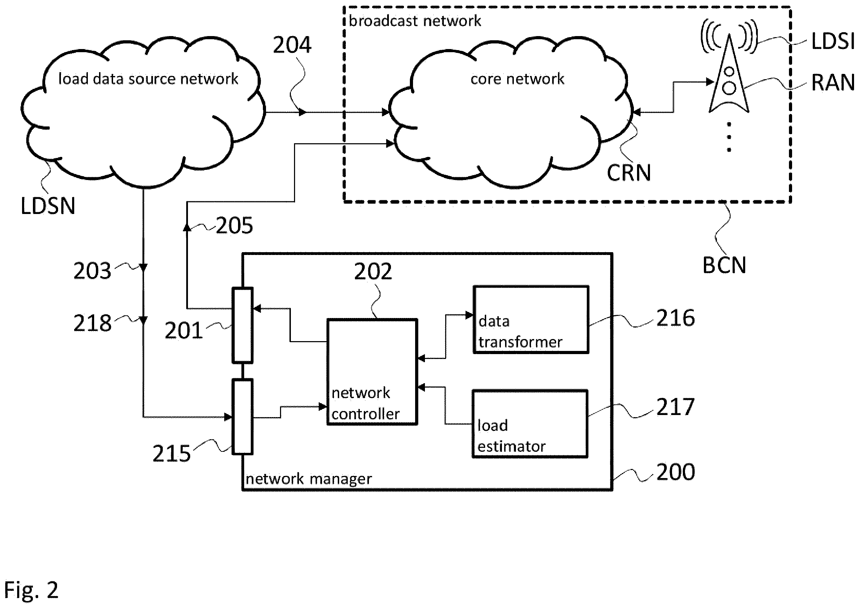

Figure 2 shows another a network manager 200 with a load data source network LDSN and a broadcast network BCN. The above explanations regarding the load data source network LDSN and the broadcast network BCN apply mutatis mutandis.

The network manager 200 is based on the network manager 100, and therefore comprises a data interface 201 that is internally communicatively coupled to a network controller 202. Externally, the data interface 201 is communicatively coupled to the broadcast network BCN. The above-presented explanations regarding the network manager 100 and its components also apply to the network manager 200 mutatis mutandis.

The network manager 200 further comprises a control interface 215 that is internally communicatively coupled to the network controller 202, and that is externally accessible via any data network, for example the internet. The control interface 215 is communicatively coupled to the load data source network LDSN. Further, the control interface 215 may for example comprise a web-based user-accessible interface, an API-based machine-accessible interface, a RESTful interface, an XML-based or JSON-based interface, and a client-program-based interface. It is understood, that the control interface 215 may also be provided as element of the data interface 201. The control interface 215 may serve as easily accessible interface for exchanging data between the network manager 200, and the provider of the request data 203.

The network manager 200 further comprises a data transformer 216 and a load estimator 217 that are both communicatively coupled to the network controller 202.

If the load data 204 as provided by the load data source network LDSN is not compatible with the radio access network resources resulting from the configuration data 205, the data transformer 216 may receive and transform the load data 204 into transformed load data 204 that is compatible with the specific radio access network resources for transmission of the load data 204. It is understood, that in such cases, the load data source network LDSN may provide the load data 204 to the network manager 200. Further, the data transformer 216 may also be coupled directly to the data interface 201 for receiving the load data 204.

In embodiments, the network controller 202 may receive the request data 203 prior to reception of the load data 204 in the core network CRN. Further, the load data 204 may be received prior to the emission of the load data 204 via the radio access networks RAN. In this case, the network manager 200, especially the network controller 202 or a dedicated storage, may store the received load data 204 until it is needed.

The load estimator 217 serves for estimating a necessity for emitting the load data signal LDSI at a specific point in time. The network controller 202 may then use this estimated necessity and generate respective configuration data 205 for the load data 204 also based on the estimated necessity, if the estimated necessity is higher than a threshold. The load estimator 217 may estimate the necessity based on respective network load information 218. Such network load information 218 may be provided by the load data source network LDSN and may comprise at least one of the type of the load data 204 or type of content of the load data 204 to be transmitted at the point in time, a number of expected receiving devices for the type of load data 204 or type of content of the load data 204, and a region of interest for the type of load data 204.

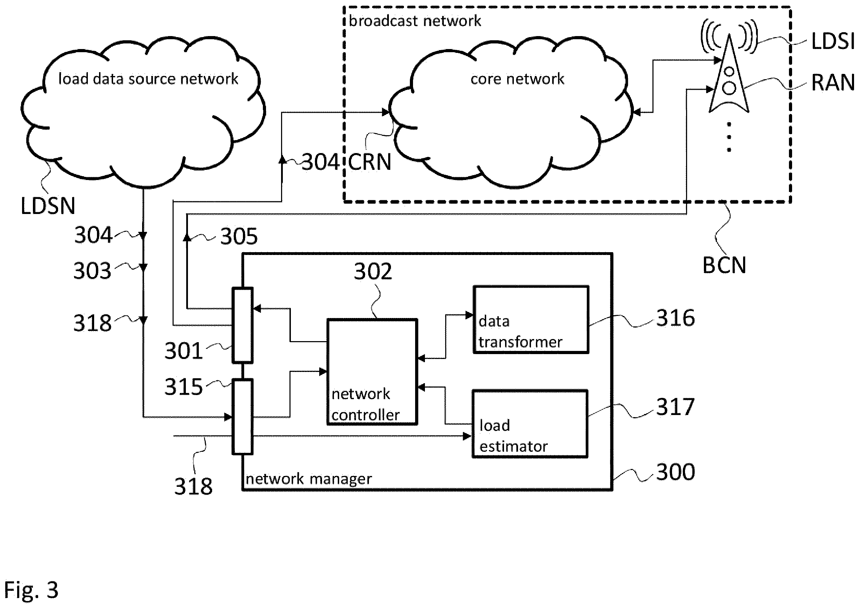

Figure 3 shows another network manager 300. The network manager 300 is based on the network manager 200, and therefore comprises a data interface 301 that is internally communicatively coupled to a network controller 302. Externally, the data interface 301 is communicatively coupled to the broadcast network BCN. The above-presented explanations regarding the network manager 100 and its components also apply to the network manager 300 mutatis mutandis. The network manager 300 also comprises a control interface 315 that is internally communicatively coupled to the network controller 302, and that is externally accessible via any data network, for example the internet. It is understood, that the control interface 315 may also be provided as element of the data interface 301. The control interface 315 may serve as easily accessible interface for exchanging data between the network manager 300, and the provider of the request data 303. The network manager 300 also comprises a data transformer 316 and a load estimator 317 that are both communicatively coupled to the network controller 302. The above-present explanations regarding the network manager 200 and its elements apply mutatis mutandis to the network manager 300 and its elements.

In contrast to the arrangement of figure 2, in figure 3 the network manager 300 receives the load data 304 and forwards the load data 304 to the core network CRN. It is understood, that the network manager 300 may also provide the load data 304 to the radio access networks RAN, instead. Further, network load information 318 may also be provided from other sources e.g., from external databases, to the load estimator 317 directly via the control interface 315.

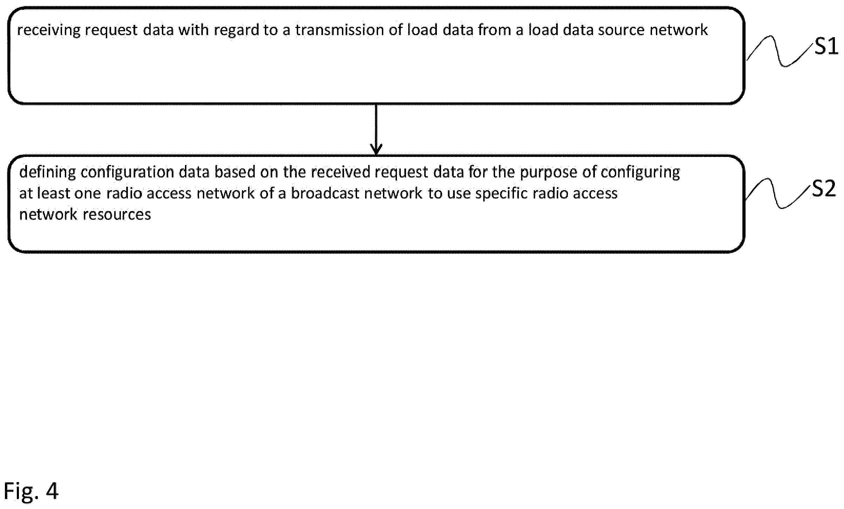

For sake of clarity in the following description of the method-based Fig. 4 the reference signs used above in the description of apparatus based Figs. 1 - 3 will be maintained.

Figure 4 shows a flow diagram of a method for managing a broadcast network BCN. The method comprises receiving S1 request data 103, 203, 303 with regard to a transmission of load data 104, 204, 304 from a load data source network LDSN, and defining S2 configuration data 105, 205, 305 based on the received request data 103, 203, 303 for the purpose of configuring at least one radio access network RAN of a broadcast network BCN to use specific radio access network resources for transmission of the load data 104, 204, 304.

The specific radio access network resources may comprise at least one of a geographical location for transmission of the load data 104, 204, 304, a frequency range for transmission of the load data 104, 204, 304, and a transmission time for transmission of the load data 104, 204, 304. Further, the request data 103, 203, 303 may comprise at least one of a priority of the load data 104, 204, 304, a quality for transmission of the load data 104, 204, 304, a bit rate for transmission of the load data 104, 204, 304, a transmission time for transmission of the load data 104, 204, 304, a geographical location for transmission of the load data 104, 204, 304, a frequency range for transmission of the load data 104, 204, 304, encryption information for the load data 104, 204, 304, types of intended receiving devices for the load data signals LDSI, and wireless radio access network resources for transmission of the load data 104, 204, 304.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents.

### LIST OF REFERENCE SIGNS

- 100, 200, 300: network manager
- 101, 201, 301: data interface
- 102, 202, 302: network controller
- 103, 203, 303: request data
- 104, 204, 304: load data
- 105, 205, 305: configuration data

- 215, 315: control interface
- 216, 316: data transformer
- 217, 317: load estimator
- 218, 318: network load information

- RAN: radio access network
- LDSI: load data signal
- BCN: broadcast network
- CRN: core network
- LDSN: load data source network

- S1, S2: method step

## Claims

1. Network manager (100, 200, 300) comprising:
a data interface (101, 201, 301) configured to communicatively couple to at least one radio access network (RAN) of a broadcast network (BCN) that is configured to wirelessly emit a load data signal (LDSI), and to communicatively couple to a load data source network (LDSN); and
a network controller (102, 202, 302) communicatively coupled to the data interface (101, 201, 301) and configured to receive request data (103, 203, 303) with regard to the transmission of the load data (104, 204, 304) from the load data source network (LDSN), and to provide configuration data (105, 205, 305) for the purpose of configuring the at least one radio access network (RAN) to use specific radio access network resources for transmission of the load data (104, 204, 304);
wherein the network controller (102, 202, 302) is configured to define the specific radio access network resources based on the received request data (103, 203, 303); and
wherein the specific radio access network resources comprise at least one of a geographical location for transmission of the load data (104, 204, 304), a frequency range for transmission of the load data (104, 204, 304), and a transmission time for transmission of the load data (104, 204, 304); and
wherein the request data (103, 203, 303) comprises at least one of a priority of the load data (104, 204, 304), a quality for transmission of the load data (104, 204, 304), a bit rate for transmission of the load data (104, 204, 304), a transmission time for transmission of the load data (104, 204, 304), a geographical location for transmission of the load data (104, 204, 304), a frequency range for transmission of the load data (104, 204, 304), encryption information for the load data (104, 204, 304), types of intended receiving devices for the load data signals (LDSI), and wireless radio access network resources for transmission of the load data (104, 204, 304).

2. Network manager (100, 200, 300) according to claim 1, wherein the network controller (102, 202, 302) is configured to receive further request data (103, 203, 303) for the transmission of further load data (104, 204, 304); and
especially wherein the network controller (102, 202, 302) is configured to define radio access network resources for transmission of the further load data (104, 204, 304) based on the received further request data (103, 203, 303) and verify if the radio access network resources defined for the further load data (104, 204, 304) conflict with the radio access network resources defined for the original load data (104, 204, 304), and especially wherein the network controller (102, 202, 302) is configured to output an alert if the radio access network resources defined for the further load data (104, 204, 304) conflict with the radio access network resources defined for the original load data (104, 204, 304).

3. Network manager (100, 200, 300) according to claim 2, wherein the network controller (102, 202, 302) is configured to provide new configuration data (105, 205, 305) that is based on the further request data (103, 203, 303) to the at least one radio access network (RAN), wherein the new configuration data (105, 205, 305) re-configures the at least one radio access network (RAN) to use at least part of the specific radio access network resources for transmission of the further load data (104, 204, 304).

4. Network manager (100, 200, 300) according to claim 3, wherein the network controller (102, 202, 302) is configured to provide the new configuration data (105, 205, 305) to the at least one radio access network (RAN) if the new request data (103, 203, 303) indicates that the further load data (104, 204, 304) has a higher priority than the original load data (104, 204, 304); and/or
wherein the network controller (102, 202, 302) is configured to provide the new configuration data (105, 205, 305) to the at least one radio access network (RAN) if the new request data (103, 203, 303) leads to the definition of a value for at least one of the radio access network resources that is inferior to the respective value caused by the original request data (103, 203, 303); and/or
wherein the network controller (102, 202, 302) is configured to provide the new configuration data (105, 205, 305) to the at least one radio access network (RAN) if the new request data (103, 203, 303) leads to the definition of a value for at least one of the radio access network resources that overwrites the respective value defined in the original request data (103, 203, 303).

5. Network manager (100, 200, 300) according to any one of the preceding claims 2 to 4, comprising a control interface (215, 315) that comprises an interface accessible via a data network, especially at least one of a web-based user-accessible interface, and an API-based machine-accessible interface, and a RESTful interface, and an XML-based or JSON-based interface, and a client-program-based interface.

6. Network manager (100, 200, 300) according to any one of the preceding claims, wherein the network controller (102, 202, 302) is configured to provide configuration data (105, 205, 305) to the at least one radio access network (RAN) that configures the at least one radio access network (RAN) to stop emitting the load data signal (LDSI) or to emit the load data (104, 204, 304) with reduced radio access network resources, if a network traffic quota defined for the source of the load data (104, 204, 304) is exceeded during the transmission of the load data (104, 204, 304).

7. Network manager (100, 200, 300) according to any one of the preceding claims, wherein the network controller (102, 202, 302) is configured to receive the request data (103, 203, 303) prior to reception of the load data (104, 204, 304) in the core network (CRN); and/or
wherein the network manager (100, 200, 300) comprises a data storage, and wherein the network controller (102, 202, 302) is configured to receive load data (104, 204, 304) and store the received load data (104, 204, 304) in the data storage.

8. Network manager (100, 200, 300) according to any one of the preceding claims, comprising a data transformer (216, 316) configured to transform the load data (104, 204, 304) into transformed load data (104, 204, 304) that is compatible with the specific radio access network resources for transmission of the load data (104, 204, 304).

9. Network manager (100, 200, 300) according to any one of the preceding claims, comprising a load estimator (217, 317) configured to estimate a necessity for emitting the load data signal (LDSI) at a point in time;
wherein the network controller (102, 202, 302) is communicatively coupled to the load estimator (217, 317) and is configured to receive the estimated necessity and to generate respective configuration data (105, 205, 305) for the load data (104, 204, 304) further based on the estimated necessity, if the estimated necessity is higher than a threshold;
wherein the load estimator (217, 317) is configured to estimate the necessity based on at least one of the type of the load data (104, 204, 304) or type of content of the load data (104, 204, 304) to be transmitted at the point in time, a number of expected receiving devices for the type of load data (104, 204, 304) or type of content of the load data (104, 204, 304), and a region of interest for the type of load data (104, 204, 304).

10. Method for managing a broadcast network (BCN), the method comprising:
receiving (S1) request data (103, 203, 303) with regard to a transmission of load data (104, 204, 304) from a load data source network (LDSN); and
defining (S2) configuration data (105, 205, 305) based on the received request data (103, 203, 303) for the purpose of configuring at least one radio access network (RAN) of a broadcast network (BCN) to use specific radio access network resources for transmission of the load data (104, 204, 304);
wherein the specific radio access network resources comprise at least one of a geographical location for transmission of the load data (104, 204, 304), a frequency range for transmission of the load data (104, 204, 304), and a transmission time for transmission of the load data (104, 204, 304); and wherein the request data (103, 203, 303) comprises at least one of a priority of the load data (104, 204, 304), a quality for transmission of the load data (104, 204, 304), a bit rate for transmission of the load data (104, 204, 304), a transmission time for transmission of the load data (104, 204, 304), a geographical location for transmission of the load data (104, 204, 304), a frequency range for transmission of the load data (104, 204, 304), encryption information for the load data (104, 204, 304), types of intended receiving devices for the load data signals (LDSI), and wireless radio access network resources for transmission of the load data (104, 204, 304).

11. Method according to claim 10, further comprising receiving further request data (103, 203, 303) for the transmission of further load data (104, 204, 304); and
especially further comprising defining radio access network resources for transmission of the further load data (104, 204, 304) based on the received further request data (103, 203, 303), and verifying if the radio access network resources defined for the further load data (104, 204, 304) conflict with the radio access network resources defined for the original load data (104, 204, 304), and especially comprising outputting an alert if the radio access network resources defined for the further load data (104, 204, 304) conflict with the radio access network resources defined for the original load data (104, 204, 304).

12. Method according to claim 11, wherein new configuration data (105, 205, 305) that is based on the further request data (103, 203, 303) is provided to the at least one radio access network (RAN) for the purpose of re-configuring the at least one radio access network (RAN) to use at least part of the specific radio access network resources for transmission of the further load data (104, 204, 304).

13. Method according to claim 12, wherein the new configuration data (105, 205, 305) is provided to the at least one radio access network (RAN) if the new request data (103, 203, 303) indicates that the further load data (104, 204, 304) has a higher priority than the original load data (104, 204, 304); and/or
wherein the new configuration data (105, 205, 305) is provided to the at least one radio access network (RAN) if the new request data (103, 203, 303) leads to the definition of a value for at least one of the radio access network resources that is inferior to the respective value caused by the original request data (103, 203, 303); and/or
wherein the new configuration data (105, 205, 305) is provided to the at least one radio access network (RAN) if the new request data (103, 203, 303) leads to the definition of a value for at least one of the radio access network resources that overwrites the respective value defined in the original request data (103, 203, 303); and/or
wherein the new configuration data (105, 205, 305) is provided to the at least one radio access network (RAN) for the purpose of configuring the at least one radio access network (RAN) to stop emitting the load data signal (LDSI) or to emit the load data (104, 204, 304) with reduced radio access network resources, if a network traffic quota defined for the source of the load data (104, 204, 304) is exceeded during the transmission of the load data (104, 204, 304).

14. Method according to any one of the preceding method-based claims, wherein the request data (103, 203, 303) is received via an interface accessible via a data network, especially at least one of a web-based user-accessible interface, and an API-based machine-accessible interface, and a RESTful interface, and an XML-based or JSON-based interface, and a client-program-based interface; and/or
wherein the request data (103, 203, 303) is received prior to reception of the load data (104, 204, 304) in the core network (CRN); and/or
wherein the received load data (104, 204, 304) is stored in a data storage.

15. Method according to any one of the preceding method-based claims, comprising transforming the load data (104, 204, 304) into transformed load data (104, 204, 304) that is compatible with the specific radio access network resources for transmission of the load data (104, 204, 304); and/or
comprising estimating a necessity for emitting the load data signal (LDSI) at a point in time based on at least one of the type of the load data (104, 204, 304) or type of content of the load data (104, 204, 304) to be transmitted at the point in time, a number of expected receiving devices for the type of load data (104, 204, 304) or type of content of the load data (104, 204, 304), and a region of interest for the type of load data (104, 204, 304), wherein the configuration data (105, 205, 305) for the load data (104, 204, 304) is defined further based on the estimated necessity if the estimated necessity is higher than a threshold.
